# EUROPÄISCHE PATENTANMELDUNG

(11) **EP 1 547 859 A1**
(43) Veröffentlichungstag der Anmeldung: **29.06.2005**
(21) Anmeldenummer: 03029865.7
(22) Anmeldetag: 27.12.2003
(51) Int. Cl.: B60P 3/32

(54) **Anhänger**

(71) Anmelder: ACR Software Services GmbH, 71332 Waiblingen (DE)
(72) Erfinder: Nerad, Dalibor, Dipl.-Ing., 70736 Fellbach (DE); Köhler, Matthias, Dipl.-Ing., 74360 Auenstein (DE)
(74) Vertreter: Bregenzer, Michael

(57) **Zusammenfassung**

Die Erfindung betrifft einen Anhänger zum Ankuppeln an ein Fahrzeug (12), insbesondere einen Personenkraftwagen, mit einem Bodenbereich (16), an der Räder (51) mindestens einer Achse angelenkt sind. Der Bodenbereich (16) des Anhängers (10) weist mindestens eine absenkbare Absenkpartie (15) auf, die zwischen einer oberen, für den Fahrbetrieb des Anhängers (10) vorgesehenen Fahrstellung, und einer unteren, für einen stationären Einsatz des Anhängers (10) vorgesehenen Absenkstellung verstellbar ist.

## Beschreibung

Die Erfindung betrifft einen Anhänger zum Ankuppeln an ein Fahrzeug, insbesondere einen Personenkraftwagen, mit einem Bodenbereich, an dem Räder mindestens einer Achse angelenkt sind.

Ein derartiger Anhänger kann beispielsweise zum Transportieren von Lasten dienen oder als Wohnanhänger ausgestaltet sein. Bei einer geschlossenen Bauweise ist ein solcher Anhänger, z.B. ein Wohnanhänger, zweckmäßigerweise begehbar. Eine Person kann einen Innenraum des Anhängers betreten, dort Lasten ablegen und aufnehmen oder aber auch sich längere Zeit, z.B. zu Wohnzwecken, in dem Anhänger aufhalten. Damit sich die Person frei bewegen kann, insbesondere aufrecht gehen kann, ist eine vorbestimmte Mindesthöhe des Anhängers notwendig. Wohnanhänger bauen daher üblicherweise sehr hoch.

Dies erweist sich jedoch im praktischen Einsatz, beispielsweise im Fahrbetrieb oder Rangierbetrieb, als nachteilig. Ein hoher Anhänger weist üblicherweise einen großen Luftwiderstand auf, was den Energieverbrauch des Zugfahrzeuges, beispielsweise eines Personenkraftwagens, erhöht. In üblichen, für Personenkraftwagen vorgesehenen Garagen, lässt sich ein Wohnanhänger bekannter Bauart nicht abstellen.

Es ist daher die Aufgabe der vorliegenden Erfindung, einen Anhänger mit kompakten äußeren Abmaßen zu schaffen, der einen relativ hohen, insbesondere durch eine erwachsene Person begehbaren Innenraum aufweist.

Zur Lösung der Aufgabe ist bei einem Anhänger der eingangs genannten Art vorgesehen, dass der Bodenbereich mindestens eine absenkbare Absenkpartie aufweist, die zwischen einer oberen, für den Fahrbetrieb des Anhängers vorgesehenen Fahrstellung, und einer unteren, für einen stationären Einsatz des Anhängers vorgesehenen Absenkstellung verstellbar ist.

Das Verhältnis Außenhöhe zu Innenhöhe ist bei einem erfindungsgemäßen Anhänger optimal. In Absenkstellung beträgt es etwa 1:1. Der Anhänger kann in vielen üblichen PKW-Garagen verstaut werden. Dennoch kann sich eine erwachsene Person in dem Anhänger bequem bewegen, da die Absenkpartie eine verhältnismäßig große lichte Weite des Innenraumes des Anhängers ermöglicht.

Der Begriff "Achse" der Räder des Anhängers ist beim erfindungsgemäßen Anhänger in geometrischer Hinsicht zu verstehen und ist vorzugsweise nicht gleichbedeutend mit "Welle". Prinzipiell wäre es zwar möglich, den Anhänger auch mit einer durchgehenden Achswelle zu versehen. Zweckmäßigerweise ist aber keine durchgehende Achswelle vorhanden, sodass die Absenkpartie zumindest teilweise zwischen den Rädern der mindestens einen Achse angeordnet sein kann.

Weitere vorteilhafte Ausgestaltungen der Erfindung ergeben sich aus den abhängigen Ansprüchen sowie aus der Beschreibung.

Die Absenkpartie ist vorzugsweise an einer Rahmenpartie des Bodenbereichs angelenkt. Die Rahmenpartie kann die Absenkpartie ganz oder teilweise umgeben. Wenn sie die Absenkpartie vollständig umgibt, ist der Anhänger besonders stabil.

Die Räder sind zweckmäßigerweise an Einzelradaufhängungen aufgehängt, was die Fahrstabilität des Anhängers verbessert. Den Rädern können beispielsweise auch Scheibenbremsen, Stabilisatoren oder dergleichen zugeordnet sein. Für die Anbringung der Einzelradaufhängung eignet sich insbesondere die Rahmenpartie.

Prinzipiell kann die Absenkpartie unmittelbar auf einen Untergrund, auf den der Anhänger abgestellt ist, abgesenkt werden. Es können aber auch Stützanordnungen an der Absenkpartie vorhanden sein, beispielsweise Kufen, zweckmäßigerweise verstellbare, beispielsweise klappbare oder verschiebliche Stützen oder dergleichen.

Der Absenkpartie ist vorteilhafterweise eine Antriebsanordnung zugeordnet, die ein komfortables Absenken oder Anheben der Absenkpartie ermöglicht. Die Antriebsanordnung kann beispielsweise elektromotorisch, pneumatisch, hydraulisch oder in sonstiger Weise motorisch erfolgen. Es ist aber auch ein handbetätigtes Absenken möglich. Besonders bevorzugt ist ein Spindelantrieb. Die Antriebsanordnung weist zweckmäßigerweise ein selbsthemmendes Getriebe auf, sodass der die Absenkpartie in der jeweils eingestellten Absenk- oder Fahrstellung auch ohne zusätzliche Arretierungsmittel oder dergleichen bleibt.

Zweckmäßigerweise sind jedoch Arretierungs- oder Verriegelungsmittel vorhanden, mit denen die Absenkpartie in der Fahrstellung und/oder der Absenkstellung arretierbar bzw. verriegelbar ist. Diese Maßnahme trägt zur zusätzlichen Sicherheit bei, wobei insbesondere eine Verriegelung bzw. Arretierung in der Fahrstellung zweckmäßig ist.

Der Absenkpartie ist zweckmäßigerweise eine Dichtungsanordnung zum Abdichten gegenüber Umwelteinflüssen zugeordnet. Die Dichtungsanordnung umfasst beispielsweise Dichtungsringe, Dichtungslippen, ineinandergreifende Vor- und Rücksprünge oder dergleichen auf, die an der Absenkpartie und/oder an der sonstigen Karosseriestruktur des Anhängers, beispielsweise an der Rahmenpartie angeordnet sind. Die Dichtungsanordnung eignet sich insbesondere zur Abdichtung der Absenkpartie in der Fahrstellung, sodass beispielsweise Spritzwasser nicht in den Innenraum des Anhängers gelangen kann. Aber auch eine Abdichtung in der Absenkstellung ist vorteilhaft.

Die Absenkpartie weist beispielsweise eine wannenartige Gestalt auf. Sie ist zweckmäßigerweise in Längsrichtung des Anhängers orientiert. Die Absenkpartie ist vorzugsweise im mittleren Bereich (bezogen auf die Anhängerquerrichtung) angeordnet, sodass sie eine Art Mittelgang zum Begehen des Anhängers bildet.

Die Absenkpartie weist beispielsweise eine Art Gehfläche auf, sodass der Anhänger in der Absenkstellung der Absenkpartie von einer erwachsenen normalwüchsigen Person in aufrechter oder nahezu aufrechter Haltung genutzt werden kann.

Der Anhänger kann als Wohn- und/oder Transportanhänger ausgestaltet sein. Eine kombinierte Form, die einerseits als Wohnanhänger und andererseits auch als Transportanhänger nutzbar ist, ist besonders bevorzugt.

Prinzipiell kann die Karosserie des Anhängers aus verschiedenartigen Materialien gefertigt sein, beispielsweise Metall, Kunststoff und Holz. Besonders bevorzugt ist eine Gitterrahmen-Tragstruktur, die mit zweckmäßigerweise auswechselbaren Beplankungselementen, z.B. Kunststoffelementen, Holzelementen, Metallelementen oder dergleichen, beplankt ist. Die Gitterrahmen-Tragstruktur ist vorteilhafterweise eine Art Käfigstruktur. Besonders zweckmäßig sind dafür Metallprofile, beispielsweise aus Aluminium, sodass der Anhänger vergleichsweise leicht ist. Die Kunststoffelemente können nach einem Unfall ohne weiteres ausgewechselt werden. Sie bestehen beispielsweise aus einem faserverstärkten Kunststoff, der beispielsweise Glasfasern oder Karbonfasern enthält.

Eine Hecktüranordnung und/oder eine Seitentüranordnung ermöglichen den Zugang zum Innenraum des Anhängers. Für beide Türanordnungen kann ein motorischer Türantrieb vorgesehen sein. Besonders vorteilhaft ist jedoch nur einem der Türanordnungen einen motorischen Türantrieb, beispielsweise einen elektrischen, pneumatischen oder hydraulischen Türantrieb, zuzuordnen, sodass die jeweils andere Türanordnung als eine Art manuell bedienbare Fluchttür dienen kann.

Zweckmäßigerweise ist die Hecktüranordnung zweigeteilt und weist eine obere und eine untere Klappe auf. Eine oder beide Klappen können seitlich verschwenkbar sein. Besonders bevorzugt ist jedoch eine Variante, bei der die obere Klappe nach oben und die untere Klappe nach unten verschwenkbar ist. Die nach unten geklappte untere Klappe kann zweckmäßigerweise eine Auffahrrampe bilden.

Nachfolgend werden Ausführungsbeispiele der Erfindung anhand der Zeichnung näher erläutert. Es zeigen:

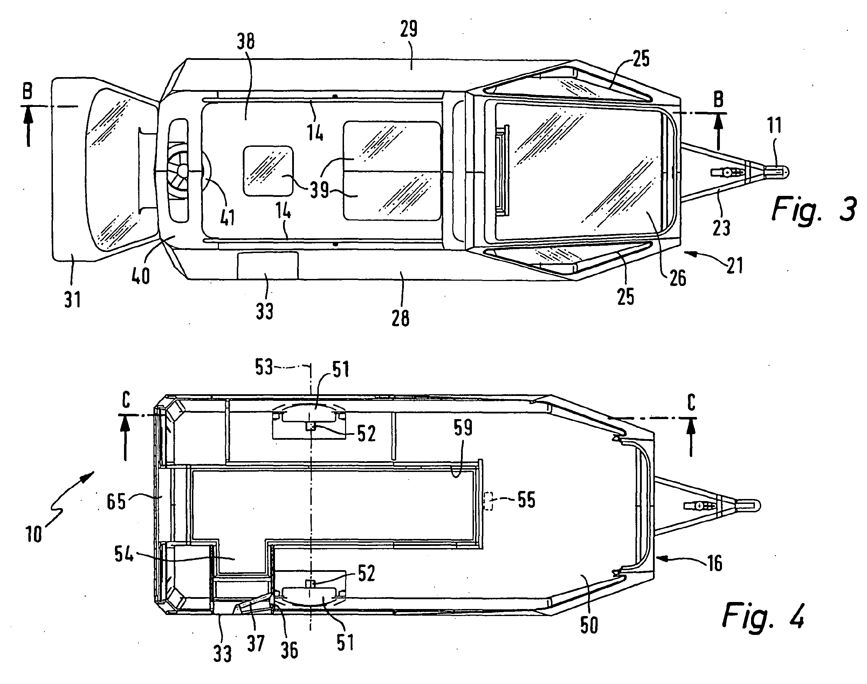

- Figur 1: einen erfindungsgemäßen Anhänger zum Ankuppeln an ein Fahrzeug mit einer Absenkpartie in Absenkstellung in seitlicher, teilweise geschnittener Darstellung entlang einer Linie B-B in Figur 3,
- Figur 2: den Anhänger gemäß Figur 1 in seitlicher, teilweise geschnittener Ansicht gemäß einer Schnittlinie C-C in Figur 4, wobei die Absenkpartie in Fahrstellung ist,
- Figur 3: den Anhänger von oben mit einer geöffneten Hecktüranordnung,
- Figur 4: eine Schnittdarstellung von oben entlang einer Schnittlinie A-A in Figur 2 des Anhängers,

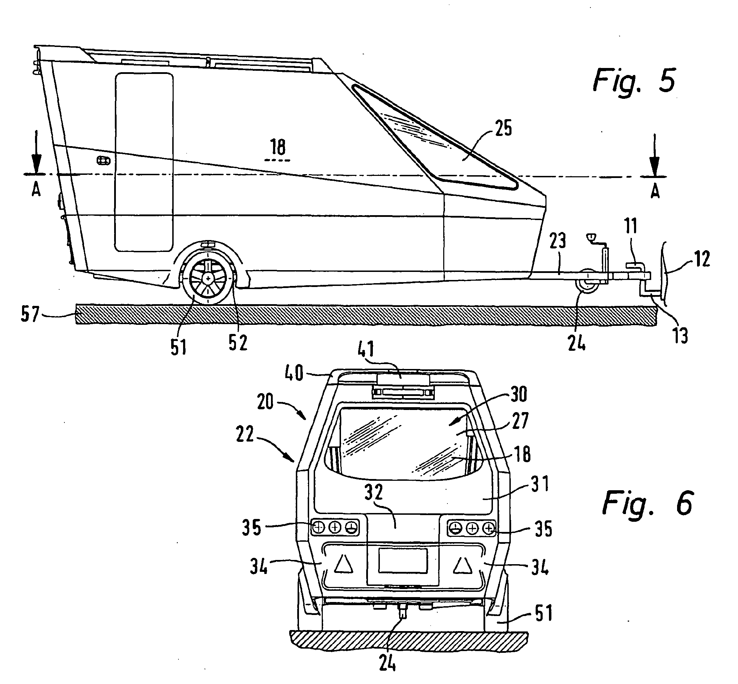

- Figur 5: eine weitere Seitenansicht entsprechend den Figuren 1 und 2, wobei der Anhänger jedoch nicht geschnitten dargestellt ist, und
- Figur 6: eine hintere Ansicht des Anhängers gemäß Figuren 1 bis 5.

Ein insgesamt mit 10 bezeichneter Anhänger ist mittels einer Kupplungseinrichtung 11 an ein Fahrzeug 12, beispielsweise einen Personenkraftwagen, ankuppelbar. Das Fahrzeug 12 ist lediglich schematisch dargestellt, wobei insbesondere ein Kupplungshaken 13 zum Ankuppeln der Kupplungseinrichtung 11 sichtbar ist. Der Anhänger 10 ist als ein vielseitig nutzbarer Wohn- und Lastenanhänger ausgestaltet und weist beispielsweise eine zumindest teilweise entfernbare, in der Zeichnung nicht dargestellte Inneneinrichtung auf.

Der Anhänger 10 ist außen nur unwesentlich höher als eine erwachsene Person. Beispielsweise ist er etwa 1,85 Meter bis 2,10 m hoch. Berücksichtigt man, dass der Anhänger 10 eine gewisse Bodenfreiheit für den Fahrbetrieb benötigt, dass die Bodenstruktur tragfähig sein muss und somit auch eine gewisse Bauhöhe benötigt und dass zudem auch im oberen Bereich eine tragfähige und stabile Karosseriestruktur nötig ist (beim Ausführungsbeispiel sind sogar noch Dachträger 14 vorhanden), so ist die resultierende, effektive Stehhöhe im Innern eines bekannten Anhängers eingeschränkt und beträgt bei einem Anhänger mit den Außenmaßen des Anhängers 10 beispielsweise etwa 1,5 Meter. Eine erwachsene Person kann sich in einem derartigen Anhänger nur in gebückter Haltung bewegen.

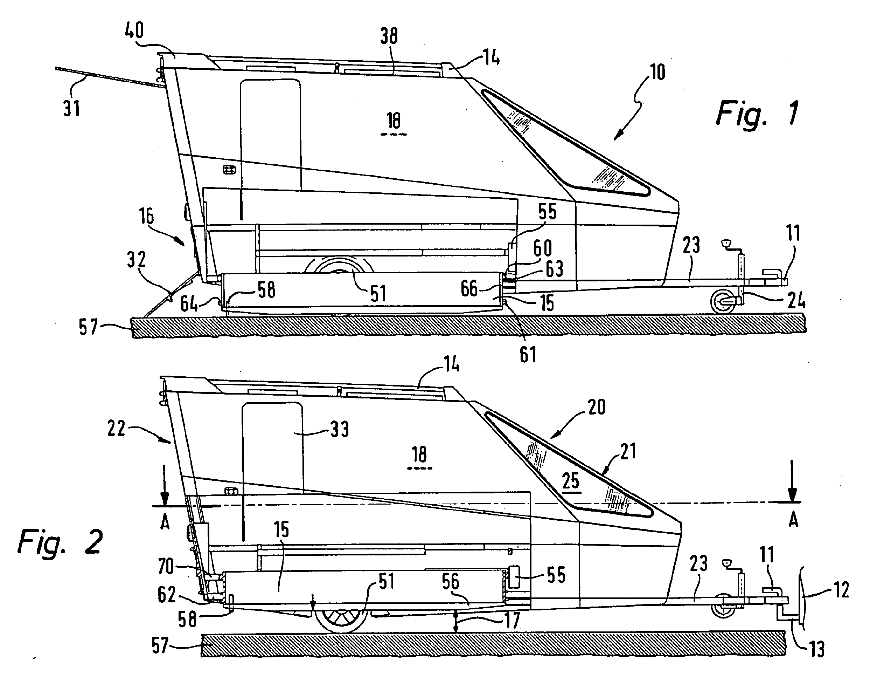

Beim Anhänger 10 ist dies jedoch nicht so, da er eine absenkbare Absenkpartie 15 in seinem Bodenbereich 16 aufweist. Die Absenkpartie 15 kann von einer Fahrstellung (Figur 2) in eine Absenkstellung (Figur 1) verstellt werden. Ein Absenkhub 17 beträgt dabei beispielsweise 17 Zentimeter. Dieser Absenkhub 17 kommt der nutzbaren Innenhöhe des Anhängers 10 vollständig oder nahezu vollständig zugute.

Der Anhänger 10 weist eine geschlossene Wohnkabine 20 auf, die auf dem Bodenbereich 16 bzw. der Bodenstruktur 16 aufgebaut ist. Die Wohnkabine 20 ist aerodynamisch optimiert und hat beispielsweise eine nach vorn abgeschrägte Frontpartie 21 und eine negativ geneigte Heckpartie 22. Vor die Frontpartie 21 steht eine Deichsel 23 nach vorne vor, an der vorne die beispielsweise als Kupplungsaufnahme ausgestaltete Kupplungseinrichtung 11 angeordnet ist. Ferner ist an der Deichsel 23 ein höhenverstellbares Stützrad 24 angeordnet, das beispielsweise mit einer Kurbel oder einer sonstigen Verstelleinrichtung zwischen einer oberen, für den Fahrbetrieb vorgesehenen Stellung und einer unteren, für den stationären Einsatz des Anhängers vorgesehenen Stellung verstellt werden kann.

An der Frontpartie 21 befinden sich Seitenfenster 25 sowie ein vorzugsweise nach oben schwenkbares, zweckmäßigerweise durch Gasdruckfedern gestütztes, großflächiges Frontfenster 26, um eine großzügige Belichtung eines Innenraumes 18 in der Wohnkabine 20 zu ermöglichen. Das Frontfenster 26 erstreckt sich beispielsweise im Wesentlichen über die gesamte Breite der Frontpartie 21. An der Heckpartie 22 befindet sich ein Heckfenster 27. Weitere Fenster, beispielsweise an Seitenwänden 28, 29 der Wohnkabine 20, sind möglich, jedoch beim Anhänger 10 nicht vorhanden.

Zum Zugang zur Wohnkabine 20 sind eine Hecktüranordnung 30 mit einer nach oben schwenkbaren Klappe 31 sowie einer nach unten schwenkbaren unteren Klappe 32 sowie eine an der Seitenwand 28 angeordnete Seitentür 33 vorgesehen. Im nach unten geklappten Zustand bildet die untere Klappe 32 eine Art Rampe, die einen bequemen Zugang zum Innenraum 18 ermöglicht. Die obere Klappe 31, in der das Heckfenster 27 angeordnet ist, schwenkt zweckmäßigerweise weit nach oben und erstreckt sich im Wesentlichen über die gesamte Breite der Wohnkabine 20, sodass der Innenraum 18 beispielsweise gut zugänglich ist und optimal belüftet werden kann. Die untere Klappe 32 ist schmaler als die obere Klappe 31. Die untere Klappe 32 ist beispielsweise zwischen zwei starren Heckwandteilen 34 angeordnet, an denen Heckleuchten 35 des Anhängers 10 angeordnet sind.

Die Klappen 32, 32 sind vorliegend manuell betätigbar. Die Seitentür 33 jedoch betätigt ein schematisch eingezeichneter Türantrieb 36. Der Türantrieb 36, beispielsweise ein Elektromotor, pneumatischer Antrieb oder dergleichen, wirkt auf eine Schwenkscharnieranordnung 37. Mit Hilfe der Schwenkscharnieranordnung 37 wird die Seitentür 33 beispielsweise seitlich nach vorne verschwenkt.

Der Anhänger 10 basiert auf einer Gitterstruktur 70 aus Metallprofilen, beispielsweise aus Aluminium, die mit vorliegend auswechselbaren Kunststoffteilen beplankt ist. Es versteht sich, dass auch eine massive Bauweise, eine Spantenbauweise oder dergleichen prinzipiell möglich sind.

An einem Dach 38 der Wohnkabine 20 sind seitlich in der Art einer Reling, d.h. in Längserstreckungsrichtung des Anhängers 10 orientiert, die Dachträger 14 angeordnet. Am Dachträger 14 kann beispielsweise ein Surfbrett, ein Boot oder dergleichen befestigt werden.

Ferner sind am Dach 38 öffenbare oder nicht öffenbare Fenster oder Luken 39 vorhanden, die bei Ausführung aus transparentem Material beispielsweise aus durchsichtigem Kunststoff sind und eine Belichtung des Innenraumes 18 ermöglichen. Die Luken 39 können öffenbar sein, um auch eine Belüftung des Innenraums 18 zu ermöglichen. Im hinteren Bereich des Daches 38 ist eine spoilerartige Querstrebe 40 angeordnet. Die Querstrebe 40 kann beispielsweise zum Halten eines Reserverades 41 dienen.

Der Bodenbereich 16 ist im Wesentlichen als eine Gitterrohrkonstruktion aufgebaut. Eine Rahmenpartie 50 des Bodenbereichs 16 umgibt rahmenartig die Absenkpartie 15. Die Absenkpartie 15 ist an der Rahmenpartie 50 beweglich, d.h. absenkbar, angelenkt. Räder 51 einer Achse 53 sind an in der Figur nicht dargestellten Einzelradaufhängungen 52 an der Rahmenpartie 50 angelenkt. Die Achse 53 ist eine geometrische Achse, d.h. keine Achswelle. Daher ist es möglich, dass die Absenkpartie 15 absenkbar zwischen den Rädern 51 angeordnet ist.

Die Absenkpartie 15 ist als eine Art Wanne ausgestaltet, die sich im Wesentlichen im mittleren Bereich in Längsrichtung des Anhängers 10 erstreckt. Die Absenkpartie 15 hat einen im wesentlichen ebenen Boden und bildet einen Mittelgang des Anhängers 10. Zur Seitentür 33 hin weist die Absenkpartie 15 einen Vorsprung 54 auf. Somit ist auch im Bereich der Seitentür 33 eine verhältnismäßig große Stehhöhe vorhanden. Wenn sich die Absenkpartie 15 in ihrer Absenkstellung befindet (Figur 1), kann sich eine Person bequem im Innenraum 18 bewegen und seitlich neben der Absenkpartie 15 angeordnete Ablagen, Einrichtungsgegenstände oder dergleichen erreichen.

Derartige Einrichtungsgegenstände sind beim Anhänger 10 beispielsweise Küchenmöbel, Schlafmöbel, Schränke oder Regale oder dergleichen. Beim Anhänger 10 sind diese Einrichtungsgegenstände entfernbar, wobei ein modulares Konzept verfolgt ist. Bei entfernten Einrichtungsgegenständen kann der Anhänger 10 als ein Lastanhänger genutzt werden. Die Einrichtungsgegenstände sind beispielsweise an der Gitterstruktur 70 des Anhängers 10, an Spanten (nicht dargestellt) oder dergleichen befestigt.

Eine Antriebsanordnung 55, beispielsweise ein Elektromotor, dient zur Höhenverstellung der Absenkpartie 15. Mit Hilfe der Antriebsanordnung 55 kann die Absenkpartie 15 zwischen ihrer Absenkstellung (Figur 1) und ihrer Fahrstellung (Figur 2) auf und ab bewegt werden. Die Antriebsanordnung 55 enthält beispielsweise einen Spindelantrieb und ist vorzugsweise mit einem selbsthemmenden Getriebe ausgestattet.

In der Absenkstellung 17 sitzen je nach Beschaffenheit von unter dem Anhänger 10 vorhandenem Untergrund 57 Kufen 56 der Absenkpartie 15 auf dem Untergrund 57 auf. Es ist möglich, dass weiterhin eine Stütze 58 zum Abstützen der Absenkpartie 15 auf dem Untergrund 57 vorhanden ist. Die Stütze 58 ist zweckmäßigerweise höhenverstellbar und dient beispielsweise zum Ausrichten der Absenkpartie 15 auf dem Untergrund 57.

Es versteht sich, dass die Absenkpartie 15 in der abgesenkten Stellung sich nicht unbedingt auf dem Untergrund 57 abstützen muss. Die Kufen 56 dienen jedoch dazu, Beschädigungen zu verhindern, wenn der Anhänger 10 in abgesenkter Stellung der Absenkpartie 15 bewegt wird.

Die Rahmenpartie 50 umschließt einen Ausschnitt 59, in dem die Absenkpartie 15 höhenverstellbar angeordnet ist. Vor Seitenwände 66 der Absenkpartie 15 stehen außen obere und untere Vorsprünge 60, 61 vor. Die Vorsprünge 60, 61 korrelieren mit einem inneren Rand 62 des Ausschnittes 59. In der abgesenkten Stellung der Absenkpartie 15 liegt der obere Vorsprung 60 am inneren Rand 62 auf bzw. stützt sich die Absenkpartie 15 mit dem oberen Vorsprung 60 an der Rahmenpartie 50 ab. In der nach oben verstellten Fahrstellung der Absenkpartie 15 liegt der untere Vorsprung 61 der Absenkpartie 15 von unten her am Rand 62 an. Die Vorsprünge 60, 61 sind beispielsweise außen um die Absenkpartie 15 ganz oder teilweise umlaufend.

Unten am oberen Vorsprung 60 und oben am unteren Vorsprung 61 sind Dichtungsanordnungen 63, 64 angeordnet, die die Absenkpartie 15 und die Rahmenpartie 50 in der Fahr- bzw. Absenkstellung miteinander dicht verbinden. Die Dichtungsanordnungen 63, 64 können beispielsweise elastische Dichtbänder oder dergleichen aufweisen. Die Dichtungsanordnungen 63, 64 sind vorzugsweise um die Absenkpartie 15 umlaufend.

Prinzipiell könnte sich zwar die Absenkpartie bis ganz nach hinten erstrecken, was die Zugänglichkeit des jeweiligen Anhängers verbessern würde. Zur Verbesserung der Stabilität ist aber beim Anhänger 10 eine hintere Quertraverse 65 der Rahmenpartie 50 vorhanden.

Zum Lastausgleich an der Deichsel 23 können nicht dargestellte Wasserbehälter vorgesehen sein, zweckmäßigerweise jeweils vor und hinter der Achse 53. Durch Befüllen der Wassertanks ist die Last an der Deichsel 23, die als Stützlast auf den Kupplungshaken 13 des Fahrzeugs 12 wirkt austarierbar.

## Patentansprüche

1. Anhänger zum Ankuppeln an ein Fahrzeug (12), insbesondere einen Personenkraftwagen, mit einem Bodenbereich (16), an dem Räder (51) mindestens einer Achse (53) angelenkt sind, **dadurch gekennzeichnet, dass** der Bodenbereich (16) mindestens eine absenkbare Absenkpartie (15) aufweist, die zwischen einer oberen, für den Fahrbetrieb des Anhängers (10) vorgesehenen Fahrstellung, und einer unteren, für einen stationären Einsatz des Anhängers (10) vorgesehenen Absenkstellung verstellbar ist.

2. Anhänger nach einem der vorhergehenden Ansprüche, **dadurch gekennzeichnet, dass** die Absenkpartie (15) zumindest teilweise zwischen den Rädern (51) der mindestens einen Achse angeordnet ist.

3. Anhänger nach Anspruch 1 oder 2, **dadurch gekennzeichnet, dass** die Absenkpartie (15) beweglich an einer Rahmenpartie (50) des Bodenbereichs (16) angelenkt ist.

4. Anhänger nach einem der vorhergehenden Ansprüche, **dadurch gekennzeichnet, dass** die Räder (51) der mindestens einen Achse jeweils an einer Einzelradaufhängung (52) aufgehängt sind.

5. Anhänger nach einem der vorhergehenden Ansprüche, **dadurch gekennzeichnet, dass** an der Absenkpartie (15) eine Stützanordnung zum Abstützen der Absenkpartie (15) in der Absenkstellung auf einem Untergrund vorhanden ist.

6. Anhänger nach einem der vorhergehenden Ansprüche, **dadurch gekennzeichnet, dass** der Absenkpartie (15) eine Antriebsanordnung (55) zugeordnet ist.

7. Anhänger nach Anspruch 6, **dadurch gekennzeichnet, dass** die Antriebsanordnung (55) ein selbsthemmendes Getriebe aufweist.

8. Anhänger nach einem der vorhergehenden Ansprüche, **dadurch gekennzeichnet, dass** die Absenkpartie (15) in der Fahrstellung und/oder der Absenkstellung arretierbar ist.

9. Anhänger nach einem der vorhergehenden Ansprüche, **dadurch gekennzeichnet, dass** der Absenkpartie (15) eine Dichtungsanordnung (63, 64) zum Abdichten eines Innenraums (18) des Anhängers (10) gegenüber Umwelteinflüssen zugeordnet ist.

10. Anhänger nach einem der vorhergehenden Ansprüche, **dadurch gekennzeichnet, dass** die Absenkpartie (15) eine wannenartige Gestalt aufweist.

11. Anhänger nach einem der vorhergehenden Ansprüche, **dadurch gekennzeichnet, dass** er als Wohn- und/oder Transportanhänger ausgestaltet ist.

12. Anhänger nach einem der vorhergehenden Ansprüche, **dadurch gekennzeichnet, dass** er eine Gitterrahmen-Tragstruktur (70) aufweist.

13. Anhänger nach einem der vorhergehenden Ansprüche, **dadurch gekennzeichnet, dass** er eine Hecktüranordnung (30) und/oder eine Seitentüranordnung (33) aufweist.

14. Anhänger nach Anspruch 13, **dadurch gekennzeichnet, dass** die Hecktüranordnung (30) und/oder die Seitentüranordnung (33) durch einen Türantrieb (36) motorisch schließbar und öffenbar sind.

15. Anhänger nach einem der vorhergehenden Ansprüche, **dadurch gekennzeichnet, dass** die Hecktüranordnung (30) eine insbesondere nach oben schwenkbare obere Klappe (31) und eine insbesondere nach unten schwenkbare untere Klappe (32) aufweist.

16. Anhänger nach Anspruch 15, **dadurch gekennzeichnet, dass** die untere Klappe (32) in einer nach unten geklappten Stellung eine Auffahrrampe bildet.
